# EUROPÄISCHE PATENTSCHRIFT

(11) **EP 1 899 185 B1**
(45) Veröffentlichungstag und Bekanntmachung des Hinweises auf die Patenterteilung: **13.01.2010**
(21) Anmeldenummer: 06777551.0
(22) Anmeldetag: 03.07.2006
(51) Int. Cl.: B60G 11/28, B60G 15/14, B60G 17/052, F16F 9/02, F16L 11/14, F16L 27/02, F16L 27/08, F16L 47/18

(54) **DRUCKMITTEL-VERBINDUNGSEINHEIT FUER EINE FAHRZEUG-GASFEDER**
PRESSURE MEDIUM CONNECTOR UNIT FOR A VEHICLE GAS SPRING
UNITE DE RACCORDEMENT A FLUIDE SOUS PRESSION POUR UN RESSORT PNEUMATIQUE DE VEHICULE

(30) Priorität: 04.07.2005 DE 202005010598 U
(43) Veröffentlichungstag der Anmeldung: 19.03.2008
(73) Patentinhaber: Voss Automotive GmbH, 51688 Wipperfürth (DE)
(72) Erfinder: BORGMEIER, Olav, 42499 Hückeswagen (DE); KAISER, Eberhard, 51709 Marienheide (DE); MITTERER, Rainer, 51688 Wipperfürth (DE); TERLAU, Norbert, 51515 Kürten (DE); PETERS, Frank, 51789 Lindlar (DE)
(74) Vertreter: Patentanwälte Dr. Solf & Zapf
(86) Internationale Anmeldenummer: PCT/EP2006/063796
(87) Internationale Veröffentlichungsnummer: WO 2007/003622

(56) Entgegenhaltungen:
- DE-A1- 3 504 217
- DE-A1- 19 922 798
- DE-U1- 8 321 524
- DE-U1- 20 005 422
- US-A- 5 690 319
- US-A- 5 921 532
- US-B1- 6 398 179

## Beschreibung

Die vorliegende Erfindung betrifft eine Druckmittel-Verbindungseinheit mit einem stationär an einem ortsfesten Karosserieteil zu montierenden, äußeren Anschlussteil einerseits und einem relativ dazu über einen bestimmten Winkelbereich um eine Federachse verdrehbaren Federkopf einer Fahrzeug-Gasfeder andererseits sowie mit einem an dem Federkopf zu montierenden inneren Anschlussteil und einer mit dem inneren Anschlussteil und mit dem äußeren, Anschlussteil zu verbindenden Leitung.

Die DE 199 22 798 A1 bzw. die korrespondierende EP 1 053 895 A2 beschreibt eine Gasfeder mit einer an eine Einlassöffnung eines Federkopfes (Federtopfes) angeschlossenen Druckleitung. Um dabei aufgrund von Lenkbewegungen des Fahrzeugs auftretende relative Drehbewegungen des Federtopfes zu ermöglichen, Ist bei der bekannten Gasfeder vorgesehen, dass die Druckleitung In Form einer Schleife bezüglich der Federachse verläuft. Konkret verläuft die Schleife konzentrisch kreisförmig um die Federachse. Dadurch kann sich die Druckleitung bei den Drehbewegungen des Federtopfes nach Art einer Uhrenfeder elastisch verformen.

In der Praxis gibt es heute häufig Anwendungsfälle, bei denen im Bereich des Federkopfes solcher Gasfedern sehr beengte, oftmals auch nicht rotationssymmetrische Platzverhaitnisse vorlieben, so dass die bekannte, weitgehend rotationssymmetrische Leitungsschleife nicht unterzubringen ist.

Der vorliegenden Erfindung liegt die Aufgabe zugrunde, eine Verbindungseinheit der genannten Art zu schaffen, die sich durch kompakte Bauform besonders für solche kritischen Raumverhältnisse eignet, dabei aber dennoch eine hohe Flexibilität und auch gute Gebrauchseigenschaften, insbesondere eine weitreichende Störungsunanfälllgkelt gewährleistet.

Erfindungsgemäß wird diese Aufgabe durch die Merkmale Jedes unabhängigen Anspruchs gelöst Vorteilhafte Ausgestaltungsmerkmale sind In den abhängigen Ansprüchen enthalten.

Demnach besteht im Falle einer Ausführung mit einer bei den relativen Drehbewegungen des Federkopfes zumindest bereichsweise elastisch verformbaren Leitung eine erste Lösung darin, dass die Leitung zwischen einem inneren, dem inneren Anschlussteil zugeordneten, endseitigen Leitungsabschnitt und einem radial äußeren, stationär zu fixierenden Leitungsabschnitt einen Verformungsabschnitt aufweist, der - bevorzugt vollständig - in einem gegenüber der Federachse exzentrisch radial versetzten Bereich des Federkopfes anzuordnen ist, wobei der Verformungsabschnitt wendelförmig mit mindestens einer unabhängig vom Verlauf der Federachse ausgerichteten Wendelachse ausgebildet ist. So kann beispielsweise die Wendelachse des Verformungsabschnittes quer, insbesondere etwa rechtwinklig oder schräg zur Federachse ausgerichtet sein. Ferner kann die Wendelachse auch gegenüber der Federachse etwa parallel versetzt verlaufen. In einer weiteren Ausführungform kann der Verformungsabschnitt der Leitung auch derart zweifach wendelförmig ausgebildet sein, dass er zwei verschiedene Wendelachsen aufweist, die insbesondere zueinander etwa rechtwinklig verlaufen. Auch dabei ist der Verlauf der Wendelachsen relativ zu der Federachse beliebig. Durch die erfindungsgemäße Ausgestaltung können somit die jeweiligen Raumverhältnisse optimal genutzt werden, so dass der Verformungsabschnitt gerade auch bei unsymmetrischen Raumverhältnissen untergebracht werden kann. Dabei kann zudem erreicht werden, dass die Leitung berührungs- und reibungsfrei untergebracht ist, wodurch die angestrebte Störungsunanfälligkeit erreicht wird. Dazu ist es zweckmäßig, wenn der Verformungsabschnitt aus gebogenen Wendelbereichen besteht, die stets berührungsund reibungsfrel voneinander beabstandet sind.

Eine zweite Lösung der genannten Aufgabe besteht darin, dass das Innere Anschlussteil schwenkbeweglich um eine etwa entsprechend der Federachse ausgerichtete Schwenkachse mit dem Federkopf verbunden ist, wobei die Schwenkachse relativ zur Federachse parallel versetzt verläuft und wobei die Leitung mit einem entweder geradlinigen, zur Federachse etwa radialen oder bogenförmigen Verlauf elastisch biegbar ausgebildet ist. Das Anschlussteil bildet demnach einen sogenannten "Swivel", der über geeignete Mittel zur Druckabdichtung verdrehbar mit dem Federkopf verbunden ist.

Anhand von mehreren, in der Zeichnung beispielhaft veranschaulichten, bevorzugten Ausführungsformen soll die Erfindung genauer erläutert werden. Dabei zeigen:
- Fig. 1: eine schematische, teilweise axialgeschnittene Seitenansicht einer Gasfeder mit einer ersten Ausführung einer erfindungsgemäßen Druckmittel-Verbindungseinheit,
- Fig. 2: eine Ansicht auf den Bereich eines Federkopfes in Pfeilrichtung II gemäß Fig. 1,
- Fig. 3: eine Draufsicht In Pfeilrichtung III gemäß Fig. 2,
- Fig. 4: eine gesonderte Ansicht nur einer Leitung entsprechend Fig. 2,
- Fig. 5: eine Ansicht der Leitung entsprechend Fig. 3,
- Fig. 6: eine zweite Ausführung der Verbindungseinheit in einer Darstellung analog zu Fig. 2,
- Fig. 7: eine Draufsicht in Pfeilrichtung VII gemäß Fig. 6,
- Fig. 8: eine separate Ansicht der Leitung entsprechend Fig. 6,
- Fig. 9: eine Ansicht der Leitung entsprechend Fig. 7,
- Fig. 10: eine dritte Ausführungsform der erfindungsgemäßen Verbindungseinheit in einer Darstellung wie in Fig. 2 bzw. 6,
- Fig. 11: eine Ansicht in Pfeilrichtung XI gemäß Fig. 10,
- Fig. 12: eine Draufsicht in Pfeilrichtung XII gemäß Fig. 10,
- Fig. 13: eine Dreiansichten-Darstellung der separaten Leitung entsprechend Fig. 10 bis 12,
- Fig. 14: eine Ausführungsvariante zu Fig. 10,
- Fig. 15: eine Seitenansicht in Pfeilrichtung XV gemäß Fig. 14,
- Fig. 16: eine Draufsicht in Pfeilrichtung XVI gemäß Fig. 15,
- Fig. 17: eine weitere Ausführungsform der Erfindung In einer Darstellung analog zu Fig. 2,
- Fig. 18: eine Draufsicht in Pfeilrichtung XVIII gemäß Fig. 17,
- Fig. 19: eine Seitenansicht in Pfeilrichtung XIX gemäß Fig. 17,
- Fig. 20: gesonderte Ansichten der Leitung entsprechend Fig. 17 bzw. 18,
- Fig. 21: eine weitere schematisches Axilschnittdarstellung des Bereichs des Federkopfes mit einer weiteren Ausführungsform der erfindungsgemäßen Verbindungseinheit,
- Fig. 22: eine weitere allerdings nicht erfindungsgemäße, Ausführung analog zu Fig. 2,
- Fig. 23: eine Draufsicht in Pfeilrichtung XXIII gemäß Fig. 22,
- Fig. 24: eine erfindungsgemäße Variante zu Fig. 22,
- Fig. 25: eine Draufsicht in Pfeilrichtung XXV gemäß Fig. 24,
- Fig. 26: eine letzte Ausführungsvariante analog zu Fig. 24,
- Fig. 27: eine Seitenansicht in Pfeilrichtung XXVII gemäß Fig. 26,
- Fig. 28: eine Draufsicht in Pfeilrichtung XXVIII gemäß Fig. 27,
- Fig. 29: eine Draufsicht in Federachsrichtung auf eine Ausgestaltung mit einer zusätzlichen Abdeckkappe,
- Fig. 30: eine Seitenansicht in Pfeilrichtung XXX gemäß Fig. 29 und 31,
- Fig. 31: einen Teilschnitt in der Ebene A-A gemäß Fig. 30,
- Fig. 32: eine Ansicht wie Fig. 31, jedoch in einer Ausführungsvariante,
- Fig. 33: eine weitere Alternative zu den Fig. 31 und 32 und
- Fig. 34: einen Querschnitt in der Ebene B-B gemäß Fig. 33.

In den verschiedenen Figuren der Zeichnung sind gleiche bzw. sich funktionell entsprechende Teile und Komponenten stets mit den gleichen Bezugszeichen versehen.

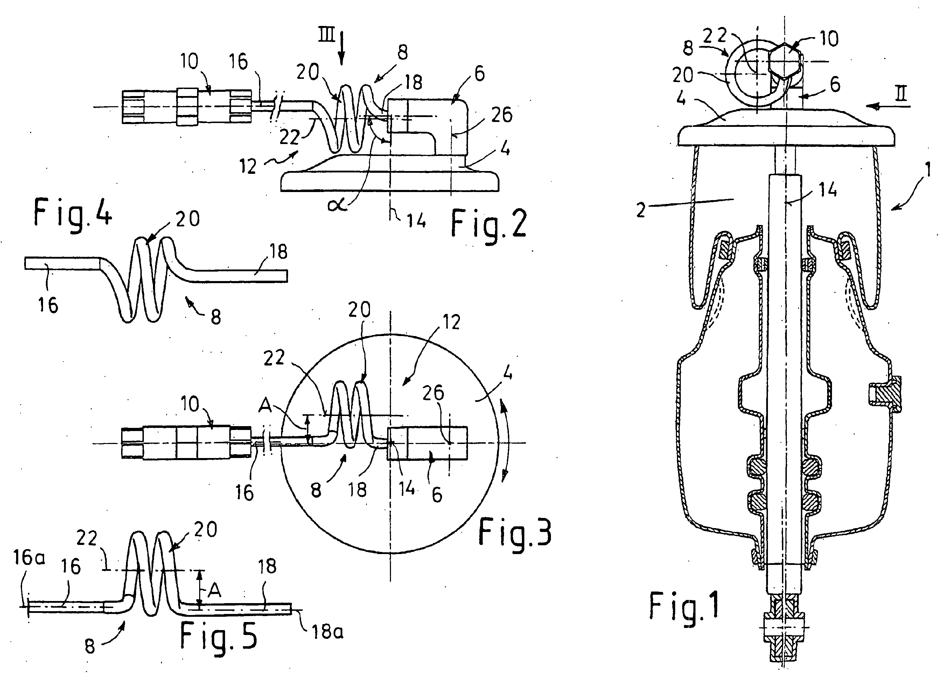

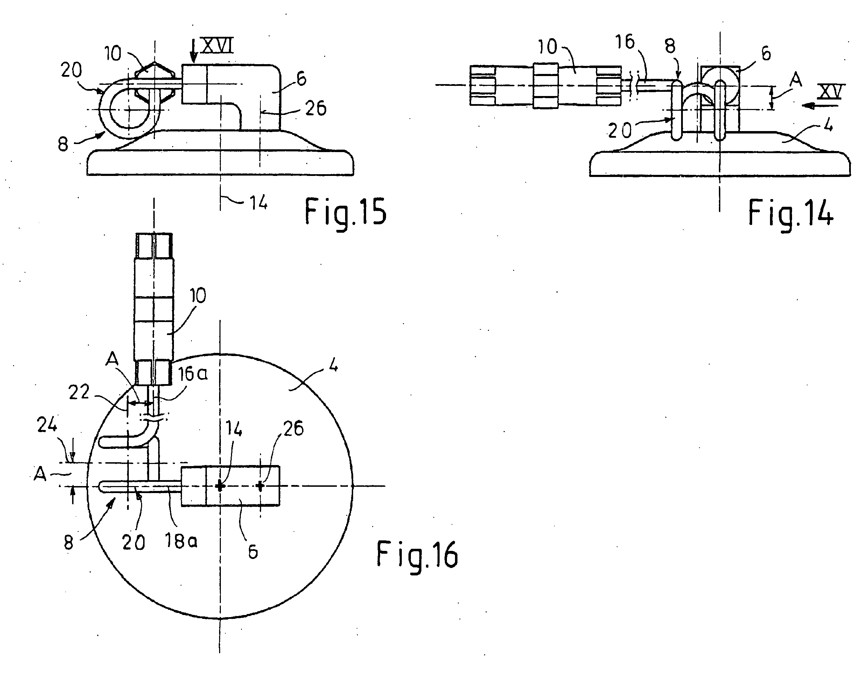

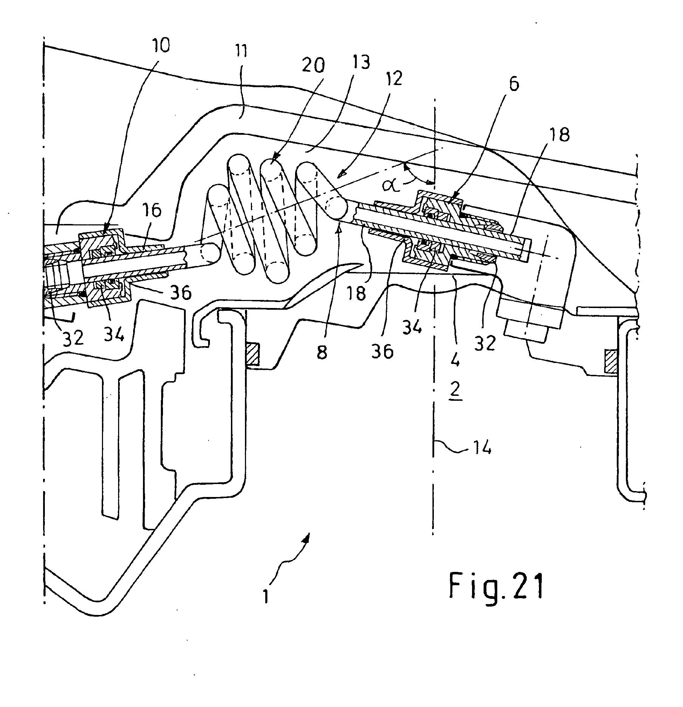

In Fig. 1 - vgl. dazu auch Fig. 21 - ist eine Fahrzeug-Gasfeder 1 dargestellt, die eine mit einem elastisch kompressiblen Druckmittel (Gas, z. B. Luft) gefüllte Federkammer 2 aufweist. Im oberen Bereich wird die Federkammer 2 von einem deckelartigen Federkopf 4 begrenzt. Um dabei die Federkammer 2 mit einer nicht dargestellten Druckquelle zu verbinden, ist im Bereich einer Öffnung des Federkopfes 4 ein inneres Anschlussteil 6 angeordnet, welches über eine Druckmittel-Leitung 8 (Rohr oder Schlauch) mit einem äußeren, stationär an einem ortsfesten Fahrzeugteil zu montierenden Anschlussteil 10 zu verbinden ist. Die Leitung 8 bildet zumindest zusammen mit dem inneren Anschlussteil 6, in den Ausführungen gemäß Fig. 1 bis 28 bevorzugt mit beiden Anschlussteilen 6 und 10, eine Verbindungseinheit 12, wobei allerdings die Leitung 8 als separates Bauteil mit den Anschlussteilen 6, 10 lösbar verbindbar, insbesondere steckverbindbar ist. Gemäß Fig. 21 ist zwischen dem Federkopf 4 und einer mit axialem Abstand oberhalb angeordneten, kappenartigen Abdeckung 11 ein Aufnahmeraum 13 für die Verbindungseinheit 12 gebildet, wobei dieser Aufnahmeraum 13 oftmals - wie in Fig. 21 auch erkennbar ist - nicht rotationssymmetrisch zu einer Federachse 14 ist.

Aufgrund von Lenkbewegungen im Fahrzeug treten in der Praxis relative Drehbewegungen um die Federachse 14 über einen bestimmten Winkelbereich zwischen dem Federkopf 4 einerseits und den benachbarten stationären Teilen und so auch der Abdeckung 11 und dem äußeren Anschlussteil 10 andererseits auf. Die Verbindungseinheit 12 muss deshalb so ausgelegt sein, dass sie diese relativen Drehbewegungen zulässt.

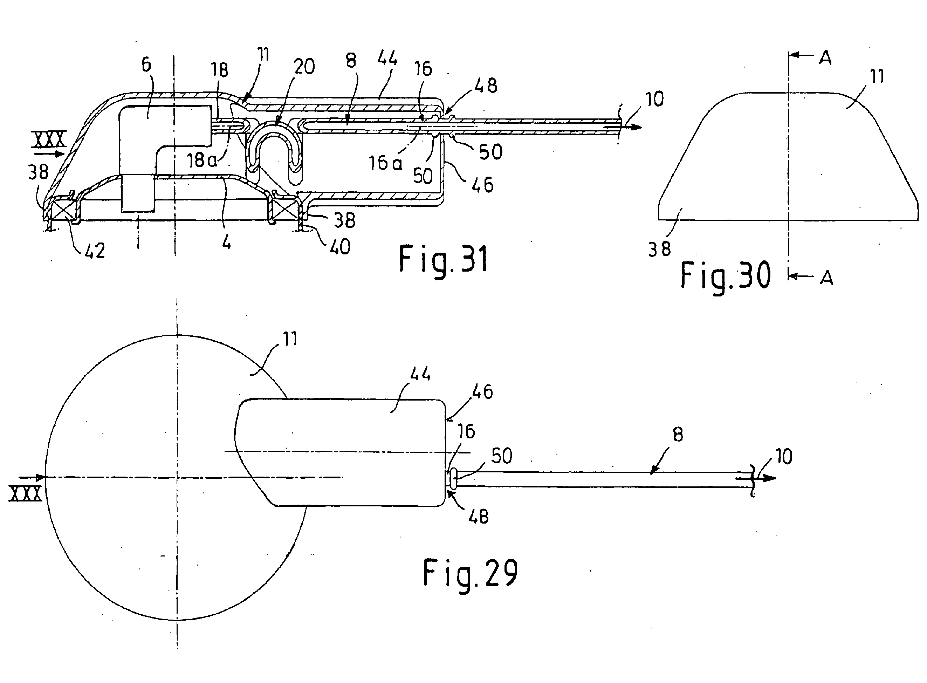

In den Ausführungsformen nach Fig. 1 bis 21, Fig. 24 bis 28 sowie Fig. 29 bis 34 ist dazu die Leitung 8 zumindest bereichsweise elastisch verformbar ausgebildet, und zwar in einem Bereich, der zwischen einem äußeren, stationär in einem äußeren Umgebungsbereich des Federkopfes 4, insbesondere an der Abdeckung 11, zu fixierenden Leitungsabschnitt 16 und einem inneren, mit dem inneren Anschlussteil 6 zu verbindenden endseitigen Leitungsabschnitt 18 angeordnet ist. Dabei kann das äußere Anschlussteil 10 im Bereich der Abdeckung 11 fixiert (vgl. Fig. 21) oder an einer anderen, gegebenenfalls recht weit (z. B. bis 5 m) entfernten Stelle innerhalb eines Fahrzeuges angeordnet sein, was in den Fig. 29 bis 33 durch eine größere Länge der Leitung 8 in Richtung des nicht dargestellten Anschlussteils 10 angedeutet werden soll.

Wie sich zunächst beispielsweise aus Fig. 2 bis 5 ergibt, weist die Leitung 8 erfindungsgemäß zwischen den zweckmäßigerweise geradlinigen Leitungsabschnitten 16, 18 einen speziell geformten Verformungsabschnitt 20 auf, der im montierten Zustand vorzugsweise vollständig in einem gegenüber der Federachse 14 exzentrisch radial versetzten Bereich des Federkopfes 4 angeordnet ist. Dies bedeutet, dass die Federachse 14 den Bereich des Verformungsabschnittes 20 nicht tangiert oder schneidet. Weiterhin ist erfindungsgemäß der Verformungsabschnitt 20 wendelförmig mit mindestens einer unabhängig vom Verlauf der Federachse 14 ausgerichteten Wendelachse 22 ausgebildet.

In der Ausführungsform gemäß Fig. 1 bis 5 ist die Wendelachse 22 quer, insbesondere etwa rechtwinklig zur Federachse 14 bzw. zu einer von der Federachse 14 definierten radialen Ebene ausgerichtet (siehe Fig. 3 und den Winkel α in Fig. 2). Gemäß Fig. 3 schneidet die Wendelachse 22 nicht die Federachse 14, sondern liegt zu einer Radialebene parallel versetzt.

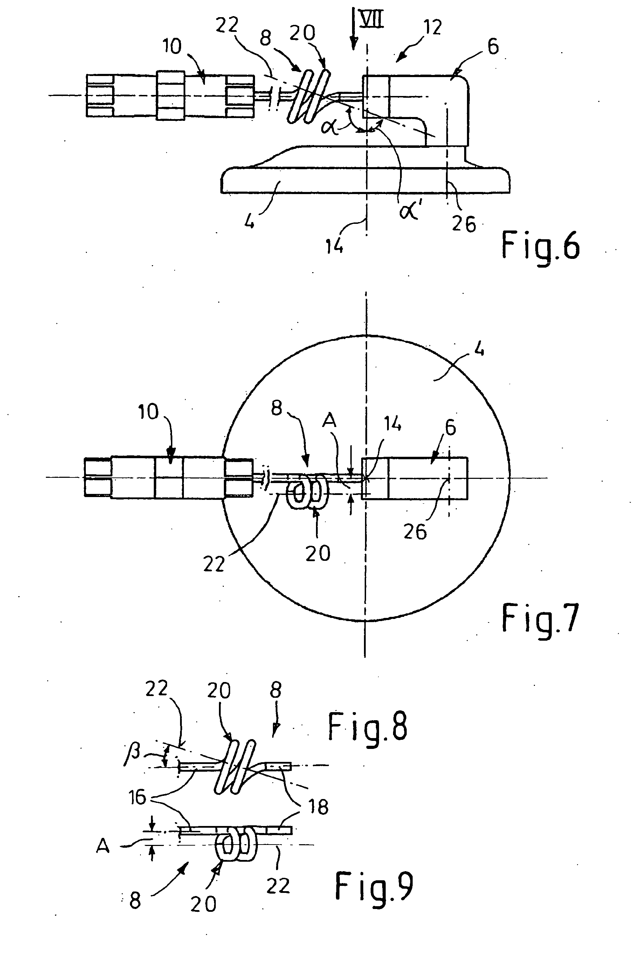

In den Ausführungen gemäß Fig. 6 bis 9 sowie 21 ist die Wendelachse 22 schräg in einem Winkel α ungleich 90° zur Federachse 14 ausgerichtet. Dabei kann der Winkel α (Fig. 21) bzw. dessen Supplementwinkel α' (Fig. 6) in einem Bereich von 5° bis 85°liegen, insbesondere etwa im Bereich von 35° bis 55°. Auch hier verläuft die Wendelachse 22 bevorzugt parallel versetzt zu einer radialen Ebene, so dass sie sich nicht mit der Federachse 14 schneidet (Fig. 7).

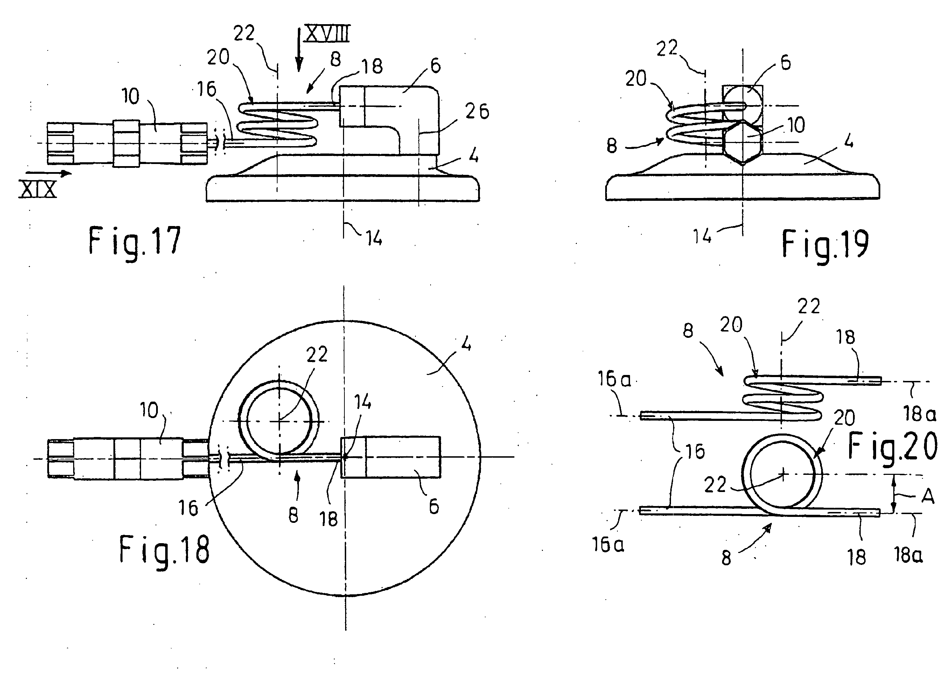

In der Ausführungsform gemäß Fig. 17 bis 20 verläuft die Wendelache 22 ebenfalls unabhängig der Federachse 14, und zwar gegenüber der Federachse 14 etwa parallel versetzt.

Bei den erwähnten Ausführungen nach Fig. 1 bis 5 und Fig. 17 bis 20 besteht der Verformungsabschnitt 20 aus beispielsweise zwei vollständigen Schraubenwendeln mit kreisförmigem Verlauf, wobei die Wendel axial voneinander reibungsfrei beabstandet sind. Bei der Ausführung gemäß Fig. 6 bis 9 sind die Wendel mit einem etwa ovalen Verlauf ausgebildet. Gemäß Fig. 21 kann auch eine Spiralwendelung vorgesehen sein, wobei ausgehend von dem äußeren Leitungsabschnitt 16 die Wendel mit stetig zunehmendem Radius bis etwa zur Hälfte des Verformungsabschnittes 20 verlaufen und dann mit wieder abnehmendem Radius bis zu dem inneren Leitungsabschnitt 18. Als Variante zu Fig. 21 kann auch eine Spiralwendelung vorgesehen sein, die von dem einen Leitungsabschnitt 16 (oder 18) aus mit stetig zunehmendem Wendelradius bis zum Ende des Verformungsabschnittes 20 bzw. bis zu dem anderen Leitungsabschnitt 18 (oder 16) verläuft.

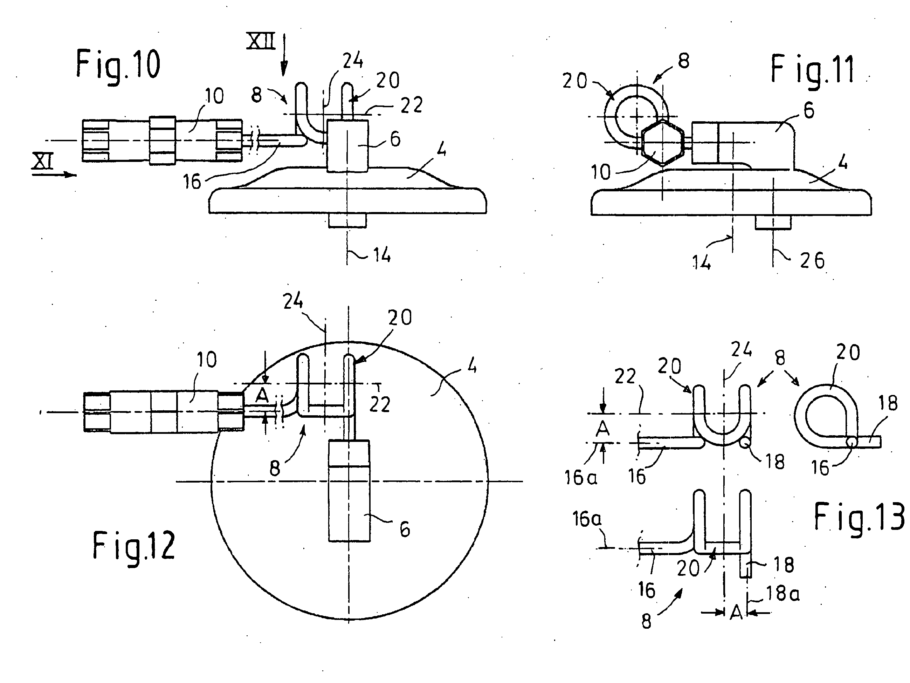

Bei den Ausführungen gemäß Fig. 10 bis 13 und Fig. 15 bis 16 ist der Verformungsabschnitt 20 der Leitung 8 jeweils derart (mindestens) zweifach wendelförmig ausgebildet, dass er (mindestens) zwei verschiedene Wendelachsen (bzw. Verformungsachsen) 22 und 24 aufweist, die insbesondere zueinander etwa rechtwinklig verlaufen. Im dargestellten Beispiel umschließt die Verlaufskontur des Verformungsabschnittes 20 annähernd einen kugelförmigen Hohlraum. Diese Ausbildung des Verformungsabschnittes 20 kann auch als "Sphäro-Wendel" bezeichnet werden.

In allen Ausführungen besteht der Verformungsabschnitt 20 aus gebogenen Wendelbereichen, die stets berührungs- und reibungsfrei voneinander beabstandet sind. Hierdurch wird eine gute Haltbarkeit erreicht, indem reibungsbedingte Beschädigungen in der Leitung 8 vermieden werden.

Die bevorzugt geradlinigen Leitungsabschnitte 16, 18 definieren jeweils durch ihre Längserstreckung eine Längsachse 16a bzw. 18a, die für eine geradlinige, direkte, im Wesentlichen radiale Verbindung gemäß Fig. 1 bis 9 und 17 bis 20 etwa auf einer gemeinsamen, durchgehenden Achse liegen. Alternativ ist gemäß Fig. 10 bis 16 und 21 für eine Winkelverbindung vergesehen, dass die Längsachsen 16a, 18a miteinander einen bestimmten Winkel von beispielsweise 90° einschießen. Wie sich weiter beispielsweise aus Fig. 5 ergibt, sind hierbei die Längsachsen 16a, 18a gegenüber der Wendelachse 22 parallel versetzt (Abstand A). Alternativ können aber die Leitungsabschnitte 16, 18 auch koaxial zu der jeweiligen Wendelung verlaufen (Längsachse 16a bzw. 18a fällt mit der Wendelachse 22 zusammen), um eine gleichmäßige (symmetrische) Verformbarkeit des Verformungsabschnittes 20 zu erreichen. In der Ausführung gemäß Fig. 6 bis 9 resultiert aus dem Schrägverlauf der Wendelachse 22 (Fig. 6) auch ein entsprechender Winkel β zwischen der Wendelachse 22 und den Längsachsen 16a ,18a (Fig. 8).

Die Leitung 8 besteht in den bisher beschriebenen Ausführungen bevorzugt aus einem glattwandigen Kunststoffrohr aus einem Elastomer, vorzugsweise aus Polyamid (PA, z. B. PA6.6). Dabei ist der Verformungsabschnitt 20 bleibend (plastisch) vorgeformt (formgebogen). Alternativ kann auch zumindest abschnittsweise ein sogenanntes Wellrohr vorzugsweise aus PA verwendet werden oder ein beliebiger Schlauch. Zudem kann es sich bei der Leitung 8 auch um einen Schichtaufbau der Wandung mit Elastomeren (PA) und/oder TPE-Schichten handeln (TPE=Thermoplastisches Elastomer).

Weiterhin kann bei allen bisher beschriebenen Ausführungen gemäß Fig. 1 bis 21 das inneren Anschlussteil 6 starr mit dem Federkopf 4 verbunden, beispielsweise verschraubt oder verlötet werden. Alternativ dazu kann es vorteilhaft sein, das innere Anschlussteil 6 schwenkbeweglich um eine etwa entsprechend der Federachse 14 ausgerichtete parallel versetzte Schwenkachse 26 mit dem Federkopf 4 zu verbinden. Dazu ist eine Schwenklagerung mit geeigneten Mitteln zur Druckabdichtung vorgesehen.

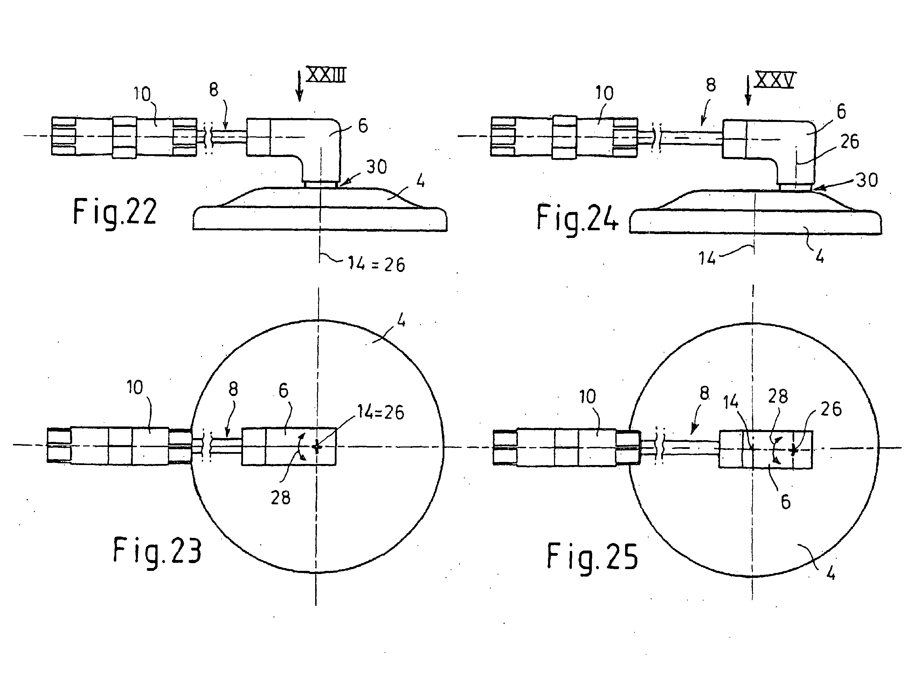

Was nun die Ausführungen gemäß Fig. 22 bis 28 betrifft, so ist dabei erfindungsgemäß obligatorisch eine solche Schwenkbeweglichkeit des inneren Anschlussteils 6 um die Schwenkachse 26 relativ zu dem Federkopf 4 vorgesehen. Das Anschlussteil 6 bildet folglich einen sogenannten "Swivel". Die Schwenkbeweglichkeit ist In den Figuren 23, 25 und 28 jeweils durch einen Doppelpfeil 28 veranschaulicht. Die Verbindung erfolgt über eine geeignete Schwenklagerung 30 mit nicht erkennbaren Mitteln zur Druckabdichtung (nach Art einer Wellendichtung).

In der nicht erfindungsgemäßen Ausführung gemäß Fig. 22 und 23 fällt die Schwenkachse 26 zumindest annähernd mit der Federachse 14 zusammen. Dadurch bleibt bei Drehbewegungen des Federkopfes 4 das Anschlussteil 6 stationär stehen, so dass die Leitung 8 mit einem insbesondere geradlinigen, zur Federachse 14 etwa radialen Verlauf relativ starr und formstabil ausgebildet sein kann. Die Leitung 8 kann deshalb aus einem beliebigen Material bestehen, außer aus Kunststoff auch sogar aus Metall, z. B. Stahl. Hiermit kann eine sehr kurze, direkte, radiale Verbindung der Anschlussteile 6, 10 erreicht werden.

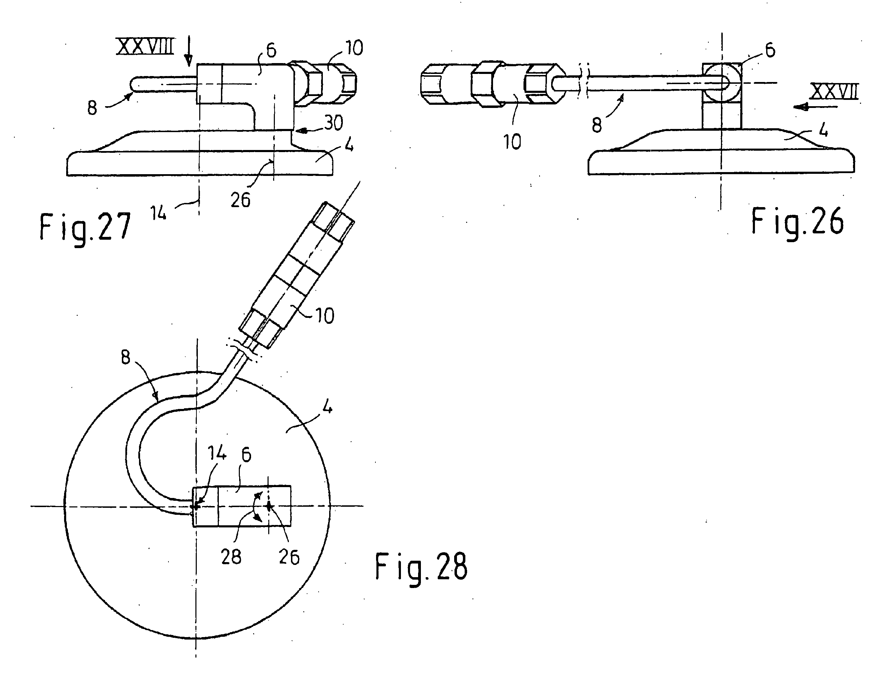

Bei den erfindungsgemäßen Ausführungen gemäß Fig. 24 bis 28 ist die Schwenkachse 26 relativ zur Federachse 14 parallel versetzt, und zwar Insbesondere auf die von dem äußeren Anschlussteil 10 entfernt liegende bzw. der Leitungsabgangsseite gegenüberliegende Seite des Federkopfes 4. Dadurch bewirken relative Bewegungen des Federkopfes 4 auch gewisse Dreh-Bewegungen des Anschlussteils 6 auf einer Kreisbahn, weil es im Bereich der Schwenkachse 26 mitgenommen wird. Deshalb ist hierbei die Leitung 8 mit einem entweder geradlinigen, zur Federachse 14 etwa radialen Verlauf (Fig. 24, 25) oder mit einem leicht bogenförmigen Verlauf (Fig. 26 bis 28) In sich elastisch biegbar ausgebildet. Dies kann mit einem glattwandigen Kunststoffrohr, einem Wellrohr oder einem Schlauch gewährleistet werden.

Bei allen in Fig. 1 bis 34 dargestellten Ausführungsformen sind die Anschlussteile 6, 10 bevorzugt zum einfachen Steckanschluss der Leitungsenden ausgebildet. Zumindest das innere Anschlussteil 6 bildet einen Winkelverbinder, wobei der Anschluss der Leitung 8 quer (senkrecht) zur Richtung der Federachse 14 und die Anschlussverbindung zur Gasfeder 2 etwa achsparallel zur Federachse 14 ausgerichtet sind. Zum Leitungsanschluss wird auf Fig. 21 verwiesen, wonach innerhalb jedes Anschlussteils 6, 10 ein Konus-Klemmring 32 und mindestens eine Umfangsdichtung 34 angeordnet sind. Zusätzlich ist in vorteilhafter Ausgestaltung zumindest das innere Anschlussteil 6 mit einem hülsenförmigen Stützelement 36 ausgestattet, welches die Leitung 8 in einem dem Anschlussteil 6 vorgeordneten Bereich des inneren Leitungsabschnittes 18 gegen Querbewegungen abstützt ("Drehmomentstütze"). Bevorzugt wird auch der äußere Leitungsabschnitt 16 ortsfest fixiert, beispielsweise mittels einer Leitungsschelle an einem stationären Federbeindom oder an/in der kappenartigen Abdeckung 11.

Hierzu wird auf die Ausführungsbeispiele gemäß Fig. 29 bis 34 verwiesen, die bezüglich des Verformungsabschnittes 20 der Leitung 8 im Wesentlichen den Fig. 10 bis 16 entsprechen, jedoch mit dem Unterschied, dass die Längsachsen 16a, 18a der Leitungsabschnitte 16, 18 etwa gleichachsig fluchtend ausgerichtet sind. Allerdings ist auch hier die Altenative mit winklig zueinander ausgerichteten Längsachsen 16a, 18a analog zu Fig. 10 bis 16 möglich.

Wie sich nun aus Fig. 29 bis 34 ergibt, ist die kappenförmige Abdeckung 11 mit einem Umfangsrand 38 ortsfest auf einem nur angedeuteten Federbeindom 40 befestigbar. Der Federkopf 4 ist über ein Drehlager 42 relativ zu dem Federbeindom 40 drehbar geführt. Die Abdeckung 11 weist einen etwa radialen Ansatz 44 mit einer endseitigen Wandung 46 auf, in deren Bereich eine Durchführung 48 für die Leitung 8 bzw. für deren äußeren Leitungsabschnitt 16 gebildet ist. Der Leitungsabschnitt 16 ist in der Durchführung 48 gegen Längsbewegungen und vorzugsweise auch gegen Drehbewegungen um die Leitungs-Längsachse 16a fixiert.

Bei der Ausführung nach Fig. 29 bis 31 weist die Leitung 8 zwei äußere, axial beabstandete, z. B. formtechnisch angestauchte Ringwulstansätze 50 auf, zwischen denen die Wandung 46 der Abdeckung 11 so sitzt, dass die Leitung 8 bzw. deren Leitungsabschnitt 16 axial fixiert ist. Zur Montage/Demontage kann die Abdeckung 11 unter elastischer Verformung im Bereich der Durchführung 48 über den jeweiligen Ringwulstansatz 50 hinweg geschoben werden.

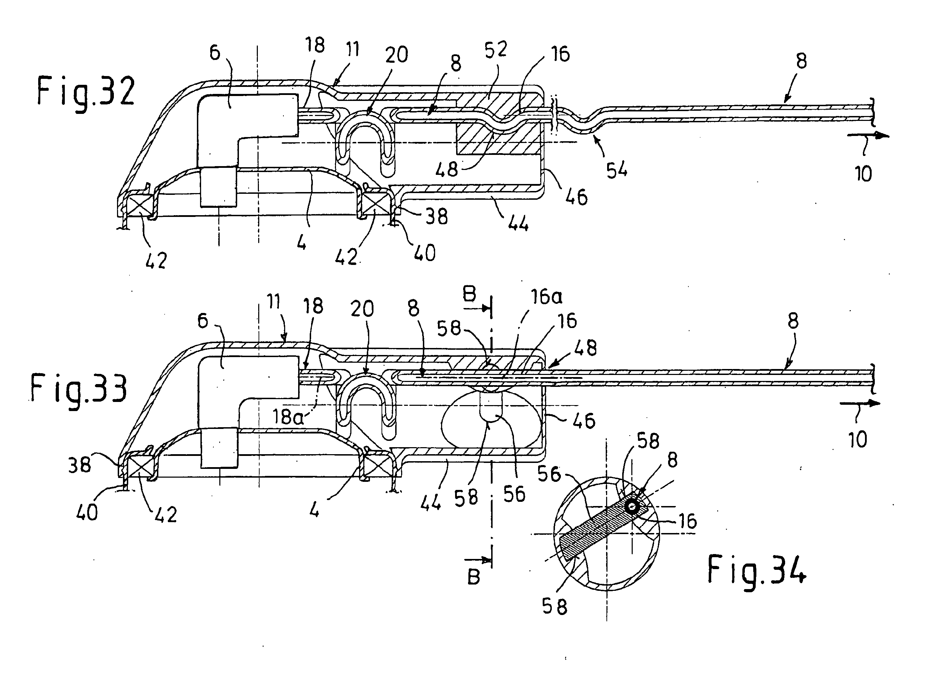

Bei der Ausführung gemäß Fig. 32 ist die Durchführung 48 als Kanal mit einer relativ großen axialen Länge innerhalb eines verdickten Wandungsbereichs 52 sowie mit einer nicht-linearen, wie dargestellt beispielsweise bogen- oder wellenförmigen Verlaufsform ausgebildet. Dabei weist die Leitung 8 im Bereich des Leitungsabschnittes 16 eine derart an die Verlaufsform der Durchführung 48 angepasste Verlaufsform auf, dass im montierten Zustand - siehe Fig. 32 - eine relative Fixierung gegen Bewegung in Längsrichtung sowie auch gegen Verdrehen um die Längsachse erreicht wird. Dabei kann die Leitung 8 in einem außerhalb der Abdeckung 11 und von dem Leitungsabschnitt 16 entfernt liegenden Bereich einen weiteren, dem Leitungsabschnitt 16 entsprechenden Abschnitt 54 aufweisen, der eine Fixierung der Abdeckung 11 auf der Leitung 8 in einer Vormontageposition ermöglicht. Eine Verschiebung der Abdeckung 11 auf der Leitung 8 ist jeweils unter elastischer Verformung der Abdeckung 11 und/oder der Leitung 8, insbesondere aber der Leitung 8 im Bereich der Abschnitte 16, 52 möglich, wodurch eine Rastung erreicht wird.

Schließlich ist bei der Ausführung gemäß Fig. 33 und 34 vorgesehen, dass die Leitung 8 im Bereich des Leitungsabschnittes 16 fest, insbesondere stoffschlüssig mit einem
Querstift 56 verbunden ist, der mit seinem Enden innerhalb der Abdeckung 11 bzw. des Ansatzes 44 in Aufnahmen 58 (siehe Fig. 34) gehalten ist. Die Montage/Demontage ist jeweils unter elastischer (Oval-) Verformung der Abdeckung 11 im Bereich des Ansatzes 44 möglich. Auch diese Ausführung bewirkt eine zweifache Fixierung der Leitung 8 im Bereich des Leitungsabschnittes 16 in Längssowie Drehrichtung.

Die Abdeckung 11 sollte zumindest bereichsweise weich und flexibel ausgebildet sein (Unfallschutz) und kann als Mehrkomponenten-Formteil aus Kunststoff bestehen (2KFormteil).

Die Erfindung ist nicht auf die dargestellten und beschriebenen Ausführungsbeispiele beschränkt, sondern umfasst auch alle im Sinne der Erfindung gleichwirkenden Ausführungen. Sie wird nur durch den Umfang der beigefügten Ansprüche beschränkt.

## Patentansprüche

1. Druckmittel-Verbindungseinheit (12) mit einem stationär zu montierenden, äußeren Anschlussteil (10) und einem relativ dazu über einen bestimmten Winkelbereich um eine Federachse (14) verdrehbaren Federkopf (4) einer Fahrzeug-Gasfeder (1) sowie mit einem an dem Federkopf (4) zu montierenden, inneren Anschlussteil (6) und einer mit dem inneren Anschlussteil (6) und dem äußeren Anschlussteil (10) zu verbindenden, bei den relativen Drehbewegungen des Federkopfes (4) zumindest bereichsweise elastisch verformbaren Leitung (8),
**dadurch gekennzeichnet, dass** die Leitung (8) zwischen einem dem inneren Anschlussteil (6) zugeordneten, endseitigen Leitungsabschnitt (18) und einem äußeren, stationär zu fixierenden Leitungsabschnitt (16) einen Verformungsabschnitt (20) aufweist, der in einem gegenüber der Federachse (14) exzentrisch radial versetzten Bereich des Federkopfes (4) anzuordnen ist, wobei der Verformungsabschnitt (20) wendelförmig mit mindestens einer unabhängig vom Verlauf der Federachse (14) ausgerichteten Wendelachse (22, 24) ausgebildet ist.

2. Verbindungseinheit nach Anspruch 1,
**dadurch gekennzeichnet, dass** die Wendelachse (22) des Verformungsabschnittes (20) quer, insbesondere etwa rechtwinklig oder schräg in einem Winkel ungleich 90°, zur Federachse (14) ausgerichtet ist.

3. Verbindungseinheit nach Anspruch 1,
**dadurch gekennzeichnet, dass** dieWendelachse(22) gegenüber der Federachse (14) etwa parallel versetzt verläuft.

4. Verbindungseinheit nach Anspruch 1,
**dadurch gekennzeichnet, dass** der Verformungsabschnitt (20) der Leitung (8) derart mindestens zweifach wendelförmig ausgebildet ist, dass er mindestens zwei verschiedene Wendelachsen (22, 24) aufweist, die insbesondere zueinander etwa rechtwinklig verlaufen.

5. Verbindungseinheit nach einem der Ansprüche 1 bis 4,
**dadurch gekennzeichnet, dass** der Verformungsabschnitt (20) aus gebogenen Wendelbereichen besteht, die berührungs- und reibungsfrei voneinander beabstandet sind.

6. Verbindungseinheit nach einem der Ansprüche 1 bis 5,
**dadurch gekennzeichnet, dass** der äußere Leitungsabschnitt (16) und der innere Leitungsabschnitt (18) der Leitung (8) jeweils eine Längsachse (16a, 18a) definieren, wobei die Verbindungsachsen (16a, 18a) entweder etwa gleichachsig verlaufen oder miteinander einen bestimmten Winkel von beispielsweise 90° einschließen.

7. Verbindungseinheit nach einem der Ansprüche 1 bis 6,
**dadurch gekennzeichnet, dass** dasinnereAnschlussteil(6) starr mit dem Federkopf (4) verbunden oder zu verbinden ist.

8. Verbindungseinheit nach einem der Ansprüche 1 bis 6,
**dadurch gekennzeichnet, dass** das innere Anschlussteil (6) schwenkbeweglich um eine etwa entsprechend der Federachse (14) ausgerichtete Schwenkachse (26) mit dem Federkopf (4) verbunden oder zu verbinden ist.

9. Druckmittel-Verbindungseinheit (12) mit einem stationär zu montierenden, äußeren Anschlussteil (10) und einem relativ dazu über einen bestimmten Winkelbereich um eine Federachse (14) verdrehbaren Federkopf (4) einer Fahrzeug-Gasfeder (1) sowie mit einem an dem Federkopf (4) zu montierenden, inneren Anschlussteil (6) und einer mit dem inneren Anschlussteil (6) und dem äußeren Anschlussteil (10) zu verbindenden Leitung (8),
**dadurch gekennzeichnet, dass** das innere Anschlussteil (6) schwenkbeweglich um eine etwa entsprechend der Federachse (14) ausgerichtete Schwenkachse (26) mit dem Federkopf (4) verbunden ist, wobei die Schwenkachse (26) relativ zur Federachse (14) parallel versetzt verläuft und wobei die Leitung (8) mit einem entweder geradlinigen, zur Federachse (14) etwa radialen oder bogenförmigen Verlauf elastisch biegbar ausgebildet ist.

10. Verbindungseinheit nach Anspruch 9,
**dadurch gekennzeichnet, dass** die Schwenkachse (26) auf einer von dem äußeren Anschlussteil (10) bzw. einer Leitungs-Abgangsseite entfernt liegenden Seite des Federkopfes (4) liegt.

11. Verbindungseinheit nach einem der Ansprüche 1 bis 10,
**dadurch gekennzeichnet, dass** die Anschlussteile (6, 10) zum Steckanschluss der Leitungsenden (16, 18) ausgebildet sind.

12. Verbindungseinheit nach einem der Ansprüche 1 bis 11,
**dadurch gekennzeichnet, dass** die Leitung (8) aus einem bereichsweise formgebogenen Kunststoff-Rohr besteht.

13. Verbindungseinheit nach einem der Ansprüche 1 bis 12,
**dadurch gekennzeichnet, dass** die Leitung (8) - insbesondere aus Kunststoff - als glattwandiges Rohr, als flexibles Wellrohr oder als Schlauch ausgebildet ist.

14. Verbindungseinheit nach einem der Ansprüche 1 bis 13,
**dadurch gekennzeichnet, dass der äußere Leitungsabschnitt** (16) über eine kappenartige, ortsfest beispielsweise auf einem Federbeindom (40) aufsetzbare Abdeckung (11) fixiert ist.

15. Verbindungseinheit nach Anspruch 14,
**dadurch gekennzeichnet, dass** die Abdeckung (11) eine Wandung (46) mit einer Durchführung (48) für die Leitung (8) aufweist, wobei die Leitung (8) mit ihrem äußeren Leitungsabschnitt (16) in der Durchführung (48) gegen Längsbewegungen und vorzugsweise auch gegen Drehbewegungen um die Leitungs-Längsachse (16a) fixiert ist.

16. Verwendung einer zumindest bereichsweise elastisch verformbaren Leitung (8) für eine Verbindungseinheit (12) nach einem der Ansprüche 1 bis 15.

## Claims

1. A pressure-medium connecting unit (12) having an outer connector (10) to be mounted in a stationary manner and a spring head (4), of a vehicle gas-spring (1), rotatable relative thereto about a spring axis (14) over a given angular range, as well as having an inner connector (6) to be mounted on the spring head (4) and a line (8) which is to be connected to the inner connector (6) and the outer connector (10) and at least regions of which are resiliently deformable during the relative rotary movements of the spring head (4), **characterised in that** the line (8) has a deformation portion (20) between an end line portion (18), associated with the inner connector (6), and an outer line portion (16) which is to be secured in a stationary manner, which deformation portion (20) is to be arranged in a region, of the spring head (4), eccentrically and radially offset with respect to the spring axis (14), wherein the deformation portion (20) is helical with at least one helix axis (22, 24) oriented independently of the course of the spring axis (14).

2. A connecting unit according to claim 1, **characterised in that** the helix axis (22) of the deformation portion (20) is oriented transversely, in particular substantially at right angles or inclined at an angle not equal to 90°, to the spring axis (14).

3. A connecting unit according to claim 1, **characterised in that** the helix axis (22) runs offset in a substantially parallel manner with respect to the spring axis (14).

4. A connecting unit according to claim 1, **characterised in that** the deformation portion (20) of the line (8) is at least of double helix configuration in such a manner that it has at least two different helix axes (22, 24) which in particular run substantially at right angles to one another.

5. A connecting unit according to any one of claims 1 to 4, **characterised in that** the deformation portion (20) is composed of curved helical regions spaced apart from one another in a contactless and frictionless manner.

6. A connecting unit according to any one of claims 1 to 5, **characterised in that** the outer line portion (16) and the inner line portion (18) of the line (8) define a longitudinal axis (16a, 18a) in each case, wherein the connecting axes (16a, 18a) either run substantially coaxially or together form a given angle of for example 90°.

7. A connecting unit according to any one of claims 1 to 6, **characterised in that** the inner connector (6) is rigidly connected to the spring head (4) or is to be rigidly connected thereto.

8. A connecting unit according to any one of claims 1 to 6, **characterised in that** the inner connector (6) is connected to the spring head (4) or is to be connected thereto, in a manner so as to be pivotable about a pivot axis (26) oriented substantially in accordance with the spring axis (14).

9. A pressure-medium connecting unit (12) having an outer connector (10) to be mounted in a stationary manner and a spring head (4), of a vehicle gas-spring (1), rotatable relative thereto about a spring axis (14) over a given angular range, as well as having an inner connector (6) to be mounted on the spring head (4) and a line (8) which is to be connected to the inner connector (6) and the outer connector (10), **characterised in that** the inner connector (6) is connected to the spring head (4) in a manner so as to be pivotable about a pivot axis (26) oriented substantially in accordance with the spring axis (14), wherein the pivot axis (26) runs so as to be offset in a parallel manner relative to the spring axis (14) and wherein the line (8) is resiliently bendable either with a rectilinear course which is substantially radial with respect to the spring axis (14) or with a curved course.

10. A connecting unit according to claim 9, **characterised in that** the pivot axis (26) lies at a side of the spring head (4) remote from the outer connector (10) or a line outlet-side.

11. A connecting unit according to any one of claims 1 to 10, **characterised in that** the connectors (6, 10) are formed for plug-in connection of the line ends (16, 18).

12. A connecting unit according to any one of claims 1 to 11, **characterised in that** the line (8) is composed of a plastics pipe, regions of which are bent.

13. A connecting unit according to any one of claims 1 to 12, **characterised in that** the line (8) - in particular of plastics material - is in the form of a smooth-walled pipe, a flexible corrugated pipe or a hose.

14. A connecting unit according to any one of claims 1 to 13, **characterised in that** the outer line portion (16) is secured via a cap-like cover (11) fixedly attachable on, for example, a suspension-strut dome (40).

15. A connecting unit according to claim 14, **characterised in that** the cover (11) has a wall (46) with a passage (48) for the line (8), wherein the line (8) is secured in the passage (48) by its outer line portion (16) so as to prevent longitudinal movements and preferably also rotary movements about the line longitudinal axis (16a).

16. Use of a line (8), at least regions of which are resiliently deformable, for a connecting unit (12) according to any one of claims 1 to 15.

## Revendications

1. Unité de raccordement pour fluide sous pression (12), comportant un élément de raccord extérieur (10), destiné à être monté de manière stationnaire, et une tête (4) d'une suspension à gaz de véhicule automobile (1), laquelle est apte à tourner par rapport audit élément de raccord sur une plage angulaire déterminée autour d'un axe (14) de la suspension, ainsi qu'un élément de raccord intérieur (6), destiné à être monté sur la tête (4) de la suspension, et une conduite (8), destinée à être reliée à l'élément de raccord intérieur (6) et à l'élément de raccord extérieur (10) et déformable élastiquement au moins par zones pendant les mouvements de rotation relatifs de la tête (4) de la suspension,
**caractérisée en ce que** la conduite (8) comporte, entre une partie de conduite (18) terminale, associée à l'élément de raccord intérieur (6), et une partie de conduite (16) extérieure à fixer de manière stationnaire, une partie déformable (20), qui doit être agencée dans une zone de la tête (4) de la suspension, laquelle zone est décalée radialement de manière excentrée par rapport à l'axe (14) de la suspension, la partie déformable (20) étant réalisée en forme de spirale avec au moins un axe de spirale (22, 24) orienté indépendamment du tracé de l'axe (14) de la suspension.

2. Unité de raccordement selon la revendication 1, **caractérisée en ce que** l'axe de spirale (22) de la partie déformable (20) est orienté transversalement, en particulier sensiblement perpendiculairement, ou en oblique selon un angle différent de 90° par rapport à l'axe (14) de la suspension.

3. Unité de raccordement selon la revendication 1, **caractérisée en ce que** l'axe de spirale (22) est décalé sensiblement parallèlement par rapport à l'axe (14) de la suspension.

4. Unité de raccordement selon la revendication 1, **caractérisée en ce que** la partie déformable (20) de la conduite (8) est réalisée au moins deux fois en spirale, de telle sorte qu'elle comporte au moins deux axes de spirale (22, 24) différents, qui sont disposés en particulier sensiblement perpendiculairement entre eux.

5. Unité de raccordement selon l'une quelconque des revendications 1 à 4, **caractérisée en ce que** la partie déformable (20) est formée par des zones en spirale courbes, qui sont situées à distance les unes des autres sans contact et sans frottement.

6. Unité de raccordement selon l'une quelconque des revendications 1 à 5, **caractérisée en ce que** la partie de conduite extérieure (16) et la partie de conduite intérieure (18) de la conduite (8) définissent chacune un axe longitudinal (16a, 18a), lesdits axes de liaison (16a, 18a) s'étendant soit sensiblement dans le même axe, soit en formant entre eux un angle déterminé, de 90° par exemple.

7. Unité de raccordement selon l'une quelconque des revendications 1 à 6, **caractérisée en ce que** l'élément de raccord intérieur (6) est relié ou est destiné à être relié de manière rigide à la tête (4) de la suspension.

8. Unité de raccordement selon l'une quelconque des revendications 1 à 6, **caractérisée en ce que** l'élément de raccord intérieur (6) est relié ou est destiné à être relié à la tête (4) de la suspension de manière pivotante autour d'un axe de pivotement (26) orienté sensiblement conformément à l'axe (14) de la suspension.

9. Unité de raccordement pour fluide sous pression (12), comportant un élément de raccord extérieur (10), destiné à être monté de manière stationnaire, et une tête (4) d'une suspension à gaz de véhicule automobile (1), laquelle est apte à tourner par rapport audit élément de raccord sur une plage angulaire déterminée autour d'un axe (14) de la suspension, ainsi qu'un élément de raccord intérieur (6), destiné à être monté sur la tête (4) de la suspension, et une conduite (8), destinée à être reliée à l'élément de raccord intérieur (6) et à l'élément de raccord extérieur (10),
**caractérisée en ce que** l'élément de raccord intérieur (6) est relié à la tête (4) de la suspension de manière pivotante autour d'un axe de pivotement (26) orienté sensiblement conformément à l'axe (14) de la suspension, ledit axe de pivotement (26) étant décalé parallèlement par rapport à l'axe (14) de la suspension et la conduite (8) étant réalisée de manière élastiquement flexible avec un tracé soit rectiligne, sensiblement radial ou courbe par rapport à l'axe (14) de la suspension.

10. Unité de raccordement selon la revendication 9, **caractérisée en ce que** l'axe de pivotement (26) est situé sur un côté de la tête (4) de la suspension, éloigné de l'élément de raccord extérieur (10) ou d'un côté sortie de la conduite.

11. Unité de raccordement selon l'une quelconque des revendications 1 à 10, **caractérisée en ce que** les éléments de raccord (6, 10) sont réalisés pour un raccordement enfiché des extrémités (16, 18) de la conduite.

12. Unité de raccordement selon l'une quelconque des revendications 1 à 11, **caractérisée en ce que** la conduite (8) est formée par un tube en matière plastique, courbe par zones.

13. Unité de raccordement selon l'une quelconque des revendications 1 à 12, **caractérisée en ce que** la conduite (8) - en particulier en matière plastique - est réalisée sous la forme d'un tube à paroi lisse, d'un tube ondulé flexible ou d'un tuyau flexible.

14. Unité de raccordement selon l'une quelconque des revendications 1 à 13, **caractérisée en ce que** la partie de conduite extérieure (16) est fixée sur un couvercle (11) en forme de capuchon, propre à être posé de manière fixe, par exemple sur un tourillon (40) de la jambe de force à ressort.

15. Unité de raccordement selon la revendication 14, **caractérisée en ce que** le couvercle (11) comporte une paroi (46) avec un passage (48) pour la conduite (8), ladite conduite (8) étant fixée avec sa partie de conduite extérieure (16) dans le passage (48) de manière à empêcher des mouvements longitudinaux et, de préférence aussi, des mouvements de rotation autour de l'axe longitudinal (16a) de la conduite.

16. Utilisation d'une conduite (8) déformable élastiquement au moins par zones pour une unité de raccordement (12) selon l'une quelconque des revendications 1 à 15.
